# EUROPEAN PATENT SPECIFICATION

(11) **EP 1 140 466 B1**
(45) Date of publication and mention of the grant of the patent: **03.07.2002**
(21) Application number: 99970631.0
(22) Date of filing: 04.09.1999
(51) Int. Cl.: B29C 49/42, B65G 47/256

(54) **ARRANGEMENT FOR IDENTIFYING AND REMOVING ASSOCIATED PREFORMS FROM A CONTINUOUS TRANSFER LINE**
EINRICHTUNG ZUM IDENTIFIZIEREN UND ENTFERNEN VERBUNDENER VORFORMEN VON EINER KONTINUIERLICHEN TRANSFERANLAGE
DISPOSITIF D'IDENTIFICATION ET D'ELIMINATION DES PREFORMES ANORMALEMENT INBRIQUEES D'UNE CHAINE DE TRANSFERT EN CONTINU

(30) Priority: 20.10.1998 IT PN980074
(43) Date of publication of application: 10.10.2001
(73) Proprietor: SIPA S.p.A., I-31029 Vittorio Veneto (IT)
(72) Inventor: CASAGRANDE, Luciano, I-31013 Codognè (IT)
(74) Representative: Giugni, Valter
(86) International application number: PCT/EP99/06516
(87) International publication number: WO 00/23254

(56) References cited:
- EP-A- 0 511 048
- EP-A- 0 856 392
- US-A- 2 911 088

## Description

The present invention refers to an apparatus for singularizing and transferring preforms made of thermoplastic material, in particular polyethylene terephtalate (PET) and polypropylene (PP), intended for use in applications implying them being subsequently blow moulded into containers adapted to be filled with liquids of various kinds, especially alimentary liquids, beverages and the like.

These processes for the production of such types of containers are generally known to be able to be schematically divided into two basic typologies, ie. single-stage and two-stage processes.

In a two-phase process, a previously produced preform or parison, which is in a substantially amorphous state, is heated up again to its preferred molecular orientation temperature, at which it is then blow-moulded into the desired shape. As used in this context, the term "two-stage process", or "double-stage process", shall be understood to cover any process that produces a preform or parison which must then be heated up from ambient temperature to the related blow-moulding temperature.

In contrast therewith, single-stage processes are so defined in that they are capable of forming the so-called preform, or parison, and transferring said preform from the injection mould or extrusion die (upon it having been allowed to cool down to some appropriate temperature) to a conditioning station, where it is allowed to evenly level at a temperature of preferred molecular orientation. Said preform or parison is then transferred to a blow-moulding die, in which it is finally moulded into its desired form.

In particular, the present invention is particularly advantageous when the described devices are associated to a preform manufacturing apparatus included in a so-called two-stage plant, but can be advantageously used also in conjunction with single-stage plants, so as they are defined above.

As a matter of fact, the need may arise in such types of plants for intermediate buffers or temporary storage units to be created as preform holding facilities, and the cases in which this is required, as well as the ways in which said buffers and the related handling means can be implemented, are exhaustively described in a detailed manner in the Italian patent application no. PN97A000007 to ZOPPAS, to which reference should therefore be made.

It is therefore a generally known fact that the handling of preforms in view of the subsequent processes and treatments must necessarily include a preform singularization step, ie. a kind of operation in which the preforms are picked singularly from an initial container in which they are stored in bulk, in particular a rotary hopper, and are lined up along a transfer means from which said preforms can then be removed or collected in the desired quantity for the subsequent processing or treatment steps.

Such a container is usually associated to a further apparatus that singularizes the preform, ie. separates it from the other preforms and prearranges it so as to be able to be sent or conveyed to an appropriate sliding or move-along line, and from this sliding line, which is essentially constituted by a simple groove delimited on both sides thereof by two guide and support rails provided in an arrangement that slopes down from the initial station to the final or terminal one, the preforms are able to slide along such a groove by simple gravity.

The preforms fit with the central portion of their cylindrical body into said groove and are supported by said two side rails which intercept the upper rim or collar thereof, immediately below the threads.

When so fitted in said groove, the preforms start to glide downwards, in contact with each other, in an orderly sequence, so as to be appropriately prearranged for being picked up by suitable removal devices.

It has been however been found both experimentally and in practice that such a method and the related machines that carry it out, although simplke a reliable, have a drawback that quite frequently forces the same machines to be stopped and be rearranged, ie. reset manually, so that they have practically to run under almost constant attendance of appropriate personnel.

Such a drawback, quite banal in its nature, is due to the fact that certain preforms, which are stored in bulk in the afore mentioned initial container, may accidentally end up by inserting into each other, in particular when said container is a rotary hopper, and, owing to possible impacts or pressures exterted upon them and the friction between surfaces made of the same plastic material, they are not able to release each other, ie. separate from each other by themselves, but remain so stuck "in pairs" also in the subsequent phases of the process.

In particular, these "pairs" of preforms stuck into each other are regularly singularized and loaded onto the sloping transfer line and, when they reach the terminal station where they are then picked up, they present themselves as a single preform that is almost double in its length.

Such a circumstance is detected by the control devices provided to this purpose, which therefore respond by immediately and automatically shutting down the plant. To restore the operation of the plant, and of course remove the preforms so stuck together, the presence of an operator is required and this requirement, along with the production loss brought about by such a shutdown of the plant, gives rise to an additional burden that is neither predictable nor quantifiable.

Based on these considerations, it therefore is a main purpose of the present invention to provide an arrangement and a method concerning the preform transfer phase of the process which are capable of doing away with the above cited drawback, so as to prevent the overall plant productivity from being jeopardized, and which are capable of being easily implemented with the aid of readily available techniques and means and therefore are reasonably low-cost, reliable and capable of being fully integrated with a preform production stage that may be provided upstream of said arrangement.

This aim, along with further features of the present invention, is reached in an arrangement for the automatic removal of mutually associated preforms operating as recited in the appended claims.

A preferred embodiment of the present ibention is described in detail and illustrated below by way of non-limiting example with reference to the accompanying drawings, in which:
- Figure 1 is a view of a preform handling and transfer plant comprising a preform transfer line on which an arrangement according to the present ivention can be installed;
- Figure 2 is a side view of an arrangement according to the present invention;
- Figure 3 is a view of the arrangement shown in Figure 2, but with an approaching preform inserted in a second preform;
- Figures 4 to 9 are side views of the respective subsequent phases in which said mutually associated preforms are grasped, lifted out and ejected from the transfer line by means of an apparatus according to the present invention;
- Figures 10 and 11 are enlarged views of an arrangement according to the present invention, with and without a rotary-motion driving belt, respectively;
- Figure 12 is a top view of the arrangement according to the present invention, which is shown jointly with a portion of the corresponding transfer line;
- Figure 13 is a view of the A-A section, referred to Figure 11, of the arrangement according to the present invention;
- Figure 14 is a side view of two preforms that are stuck into each other, in the state in which they must therefore be desirably removed from the production flow by means of the arrangement according to the present invention.

With reference to the Figures, they can be noticed to illustrate a sequence of preforms 1 entering in an orderly line a pair of parallel rails 2, 3 that are inclined with respect to the horizontal plane so as to enable said preforms to glide along by gravity from an upper loading station 4 down to a lower unloading station 5. Above said rails, in an intermediate position thereof, there is installed an arrangement 6 comprising a central structure 7 that is adapted to rotate about a horizontal axis X.

On this central structure there are attached a plurality of forks 8 projecting from respective outer portions of said central structure 7, which are contained within planes that do not pass through said rotation axis X, are substantially arranged above said rails and in such a manner as to ensure that the position of any of said forks is determined by the rotation about said axis X of any other of said forks. On the other hand, their configuration and arrangement can be clearly and unmistakably recognized and understood from the illustrations appearing in the accompanying Figures.

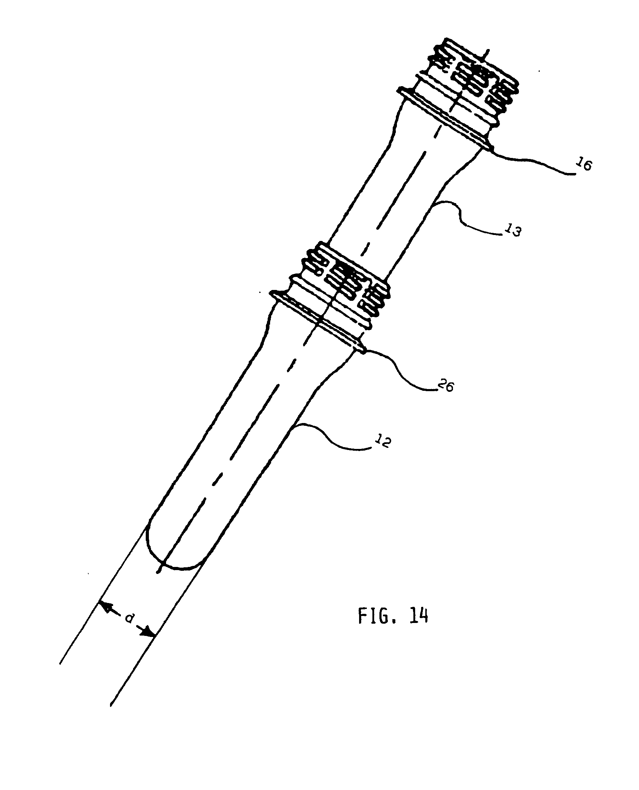

Furthermore, said forks are such as to comply with the following additional requirements:
a) the side arms 9, 10 of said forks are substantially parallel and are spaced from each other by a separation distance Z that is wider than the outside diameter of the threaded portion of the preforms passing by, but narrower than the diameter of the collar of the same preforms;
b) the disposition and size of said central structure 7 together with said forks 8 are such as to ensure that said forks, when rotating into their lowest position, do not interfere with said parallel rails 2,3, while their arms move from the opposite sides very close to the threaded portions of the preforms gliding along below said central structure;
c) given two preforms of the same type that areinserted into each other so as to form a special pair of preforms in which the outer or lower preform is indicated at 12 and the inner or upper preform is indicated at 13, as this is shown in Figure 14, when such special pairs of preforms 12 and 13 are loaded onto the transfer line within said pair of parallel rails, the height of the collar 16 of the upper preform 13 comes to be substantially at the same level or height H of said arms 9, 10 of said forks 8 when the latter are arranged on a plane that is substantially parallel to said rails, as shown in the Figures.

Any further feature or characteristic of said forks, said central structure 7 and their mutual fastening and disposition relative to the pair of rails can be clearly inferred from the Figures and is readily deducible by those skilled in the art, so that a detailed description thereof is intentionally omitted here for reasons of brevity.

The operation of the above described arrangement is as follows:

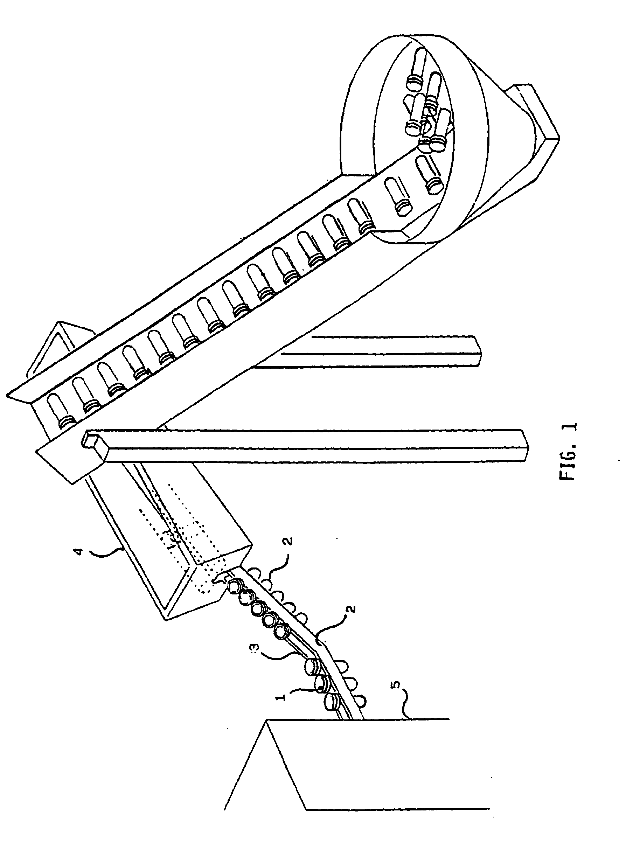

With reference to Figure 1, it can be noticed how the preforms are normally sent by gravity along the transfer line, constituted by the two rails 2 and 3, so as to move from the loading station 4 to the unloading station 5.

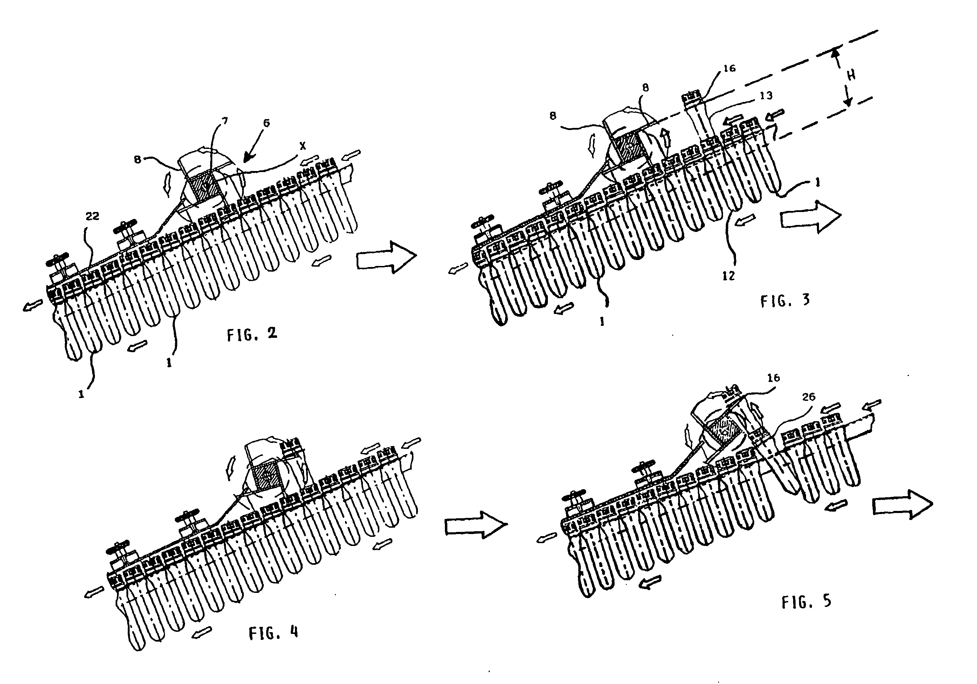

Such a situation of normality is illustrated in greater in Figure 2 which shows also the positioning and, albeit schematically, the structure of the arrangement 6 according to the present invention.

In this situation of normality the preforms 1 glide along within said gap or groove formed between said two rails 2 and 3 and move below the arrangement 6 without being intercepted; in fact, the forks 8, which rotate in the direction shown in the Figures, ie. in such a manner that the direction of their movement, when they are in their lowest position, is the opposite of the direction of movement of the preforms gliding along by gravity, are able to neither touch said rails, since their length does not allow them to do it, nor the threaded portion of the preforms, since the side arms 9, 10, although lowering to the level of said threaded portion, are separated and spaced from each other by an extent enabling them to move laterally past said threaded portion, on the two opposite sides thereof, without coming up against it and, as a result, without stopping or altering in any way the motion of the regular preforms.

Conversely, when mutually inserted or stuck preforms 12 and 13, as shown in Figure 14, are loaded into said rails 2 and 3 by the loading station 4, said preforms then present themselves on the transfer line as illustrated in Figure 3, ie. with the upper inner preform 13 having its collar 16 at a height H that corresponds to the height of a general fork 8 when this is rotated so that its arms arrange themselves on the inclined plane extending parallelly to said rails.

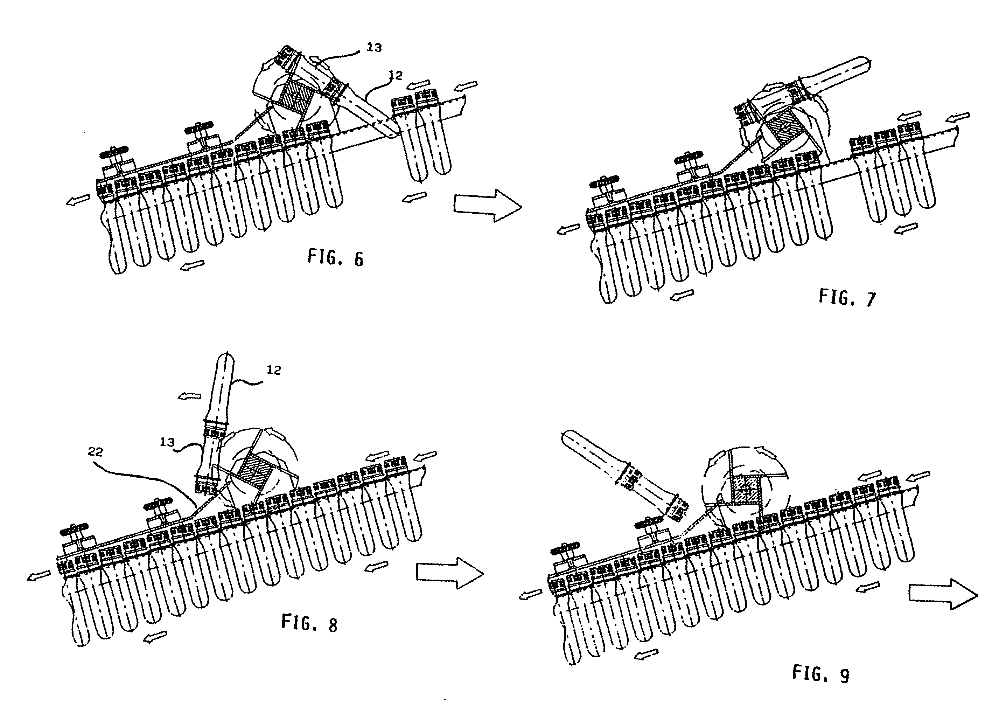

When these preforms 12, 13, as supported by the collar 26 of the lower preform 12 resting on the rails, move towards the arrangement 6, a rotating fork 8 glides initially, without getting engaged, along the flanks of the body of the upper preform 13, until the collar 16 of said upper preform is eventually grasped by the same fork, as shown in Figure 4, and is first lifted out by it and then rotated, as illustrated in Figures 5 through to 9, wherein it carries with it both said preforms inserted into each other, which, after having so been removed from the continuous sequence of regular preforms 1, are ejected backwards by letting them drop freely, as shown in Figure 9. Such an effect actually achieves the purpose of the present invention.

The above described arrangement can be further improved through the implementation of some variants that are aimed at increasing the effectiveness and the utilization scope thereof. The first such measure consists in giving the various component parts of the central structure 7 and the forks 8 such dimensions, shape and rotational speeds as to enable them to intercept and remove even a plurality of pairs of mutually inserted preforms that may come up in a continuous sequence along said rails 2, 3. Such an occurrence, although rather uncommon in the practice, must anyway be taken into due account in view of adequately counteracting, ie. eliminating it, since it only takes just one of such preforms 12, 13 escaping the filtering action of said arrangement 6, and the resulting removal from the line, to bring about a shut-down of the whole plant.

The selection and definition of said geometric and dimensional features, as well as the numerousness and the angular velocity of said forks, so as to obtain the desired result, are fully within the capability of those skilled in the art, so that their description in detail will be intentionally omitted here for reasons of brevity.

A further improvement can be obtained by letting the forks rotate continuously, so as to do away with the constructional complication of having to provide forks that only start to move when activated by special sensors detecting the passage of pairs of mutually inserted preforms 12, 13 that have desirably to be removed from the line.

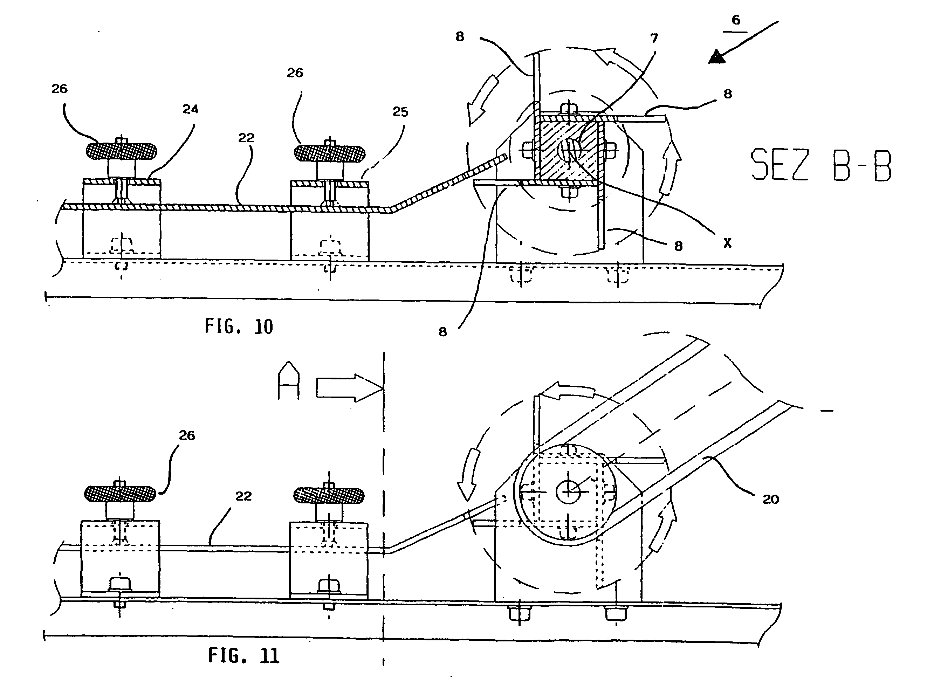

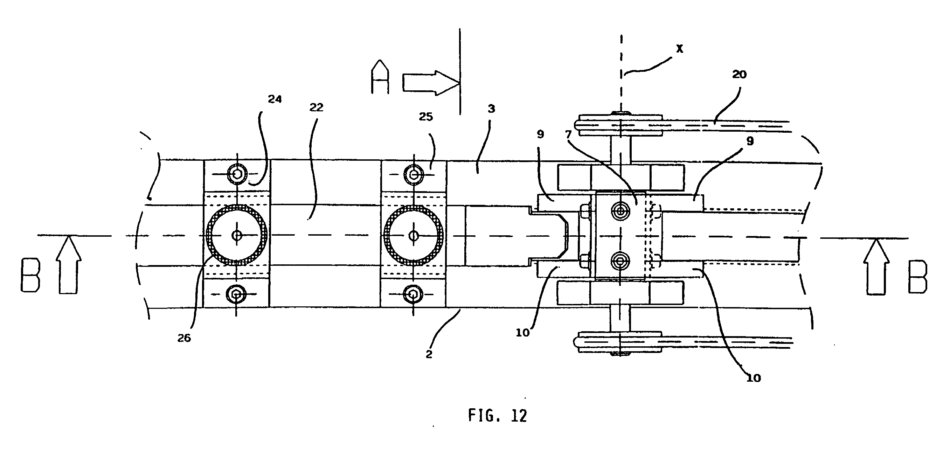

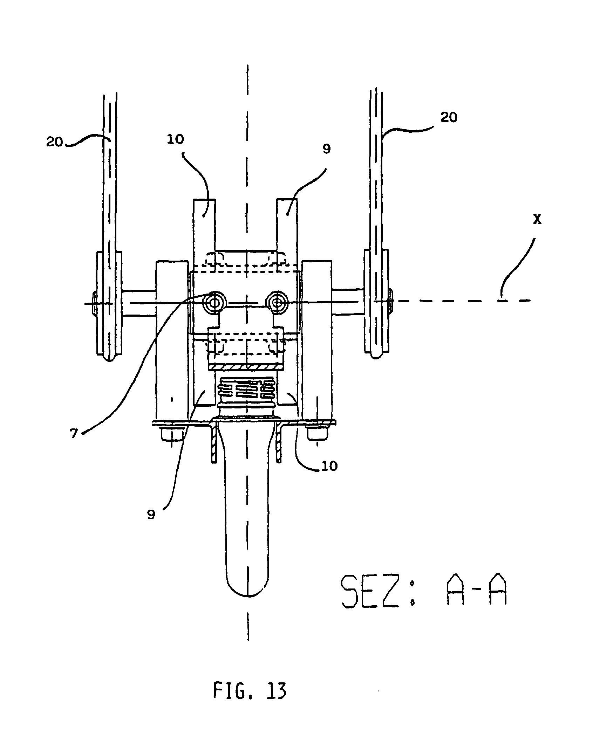

In particular, the continuousness of the rotational motion of said forks and said central structure is advantageously obtainable by means of at least a drive belt 20, adapted to engage a respective appropriate pulley 21 shrink-fitted on to said central structure 7, so as shown in Figures 11,12 and 13.

Finally, with reference to Figures 10, 11 and 12, a useful improvement is offered by the fact of providing a protection member 22 arranged between the portion situated downstream of said arrangement 6 and the portions situated therebelow of said rails 2 and 3. Such a member, which may possibly be properly bent in view of increasing its protection effectiveness, has the task of intercepting the pairs of mutually inserted preforms 12, 13 as they are ejected and unloaded behind said arrangement 6. In fact such preforms, if not otherwise diverted, would automatically disengage, ie. drop by gravity after approx. half a turn and would therefore fall exactly on to the preforms that are regularly arranged on the rails downstream of the arrangement 6, with the risk of damaging and/or altering the regular sequence thereof.

In view of doing away with such a risk, said protection member 22 is arranged downstream of said arrangement 6. and immediately above the preforms 1, so as to guard them against the fall of preforms being released and dropped thereabove., wherein said protection member can be applied to said rails by means of several fastening means 24, 25 constituted preferably by bridge-like brackets provided with suitable means, preferably screws 25 or the like, adapted to allow for said protection element 22 to be locked in position or to be released for any operational or maintenance requirement whatsoever.

It will be appreciated that, although described based on the example of preferred embodiments thereof and using a commonly known terminology, the present invention shall by no means be considered as being limited by such a description and such a terminology, since those skilled in the art are capable of devising and introducing a number of modifications. The appended claims shall therefore be intended to extend to and cover such obvious modifications.

## Claims

1. Apparatus for transferring preforms (1), comprising a pair of parallel rails (2, 3) separated by a groove-forming gap in which a plurality of preforms are inserted temporarily so as to be able to glide in an orderly sequence between said rails, which are arranged slopingly from an upper loading station (4) down to a lower unloading station (5), said apparatus being provided with an arrangement (6) adapted to:
- intercept the passage of pairs of preforms in which an inner preform (13) is inserted, with the closed end of the body thereof, in the aperture of a respective outer preform (12), said pair of preforms being supported by said rails by means of said parallel rails engaging the collar portion (26) of said outer preform, and said inner preform (13) moving forward at such a height that the respective collar (16) thereof is raised from the upper edge of said rails by a distance (H) that is greater than a pre-determined value.
- remove said pair of preforms (12, 13) from said plurality of preforms (1),
- to lift out and remove from said groove-forming gap said pairs of preforms (12, 13) of which one is inserted in the other one, **characterized in that**
- said arrangement comprises a plurality of rotary forks (8), each one of which is provided with two outer parallel arms (9, 10) arranged above said rails,
- said arms being capable of moving into at least a first position (Fig. 4) in which the collar of said incoming inner preform is engaged by said arms, and a second position (Fig. 8) in which said arms lift said pairs of preforms out of said rails and rotate so as to remove and eject said pair of preforms from said rails,
- said forks being rotating around the same unique axis (X).

2. Apparatus according to claim 1, **characterized in that** the end portions of said arms of said forks are spaced from each other by a distance that is greater than the diameter of the threaded portion of said preforms (1) and the diameter (d) of the cylindrical body of the preform below the respective collar.

3. Apparatus according to claim 2, **characterized in that** the rotation of said forks takes place about a horizontal axis (X) extending transversally with respect to the vertical plane passing through said groove-forming gap and situated at a higher position above it.

4. Apparatus according to claim 3, **characterized in that** the rotation of said arrangement is a continuous rotation, and that the rotation rate is such and the angle between said rotary forks is such that said forks are adapted to remove two successive and adjacent ones of said pairs of inner and outer preforms (12, 13) individually.

5. Apparatus according to any of the preceding claims. **characterized in that** the arms of said forks are adapted to assume an orientation that is parallel to said rails when the distance (H) between said forks and said rails is equal to or slightly smaller than the distance between said rails and the collar (16) of said inner preform (13).

6. Apparatus according to any of the preceding claims, **characterized in that** it is also provided with a protection member (22), preferably formed by a removably mounted bracket-like member, attached thereto by means of appropriate fastening means (24, 36) and situated immediately downstream of said arrangement above the respective portion of said rails.

## Patentansprüche

1. Vorrichtung zum Transportieren von Vorformen (1), die ein Paar von parallelen Schienen (2, 3) umfasst, die durch einen vertieften Zwischenraum getrennt werden, in dem eine Vielzahl von Vorformen vorübergehend eingesetzt sind, so dass sie in einer geordneten Reihenfolge zwischen den Schienen gleiten können, die sich mit einer Neigung von einer oberen Ladestation (4) nach unten zu einer unteren Entladestation (5) erstrecken, wobei die Vorrichtung eine Anordnung (6) mit den folgenden Funktionen umfasst:
Unterbrechen des Durchgangs von Paaren von Vorformen, bei denen jeweils eine innere Vorform (13) mit ihrem geschlossenen Ende in die Öffnung einer entsprechenden äußeren Vorform (12) eingesetzt ist, wobei das Paar von Vorformen durch die Schienen gehalten wird, indem die parallelen Schienen in den Bundteil (26) der äußeren Vorform eingreifen, und wobei sich die innere Vorform (13) in einer derartigen Höhe vorwärtsbewegt, dass sich ihr Bund (16) mit einer Distanz (H), die größer als ein vorbestimmter Wert ist, über der oberen Kante der Schienen bewegt,
Entfernen des Paares von Vorformen (12, 13) aus der Vielzahl von Vorformen (1)
Herausheben und Entfernen des ineinander gesetzten Paares von Vorformen (12, 13) aus dem vertieften Zwischenraum, **dadurch gekennzeichnet, dass**
die Anordnung eine Vielzahl von Drehgabeln (8) umfasst, die jeweils mit zwei parallelen und sich über die Schienen erstreckenden Außenarmen (9, 10) versehen sind,
die Arme zu wenigstens einer ersten Position (Fig. 4) bewegt werden können, in welcher die Arme in den Bund der ankommenden inneren Vorform eingreifen, sowie zu einer zweiten Position (Fig. 8), in welcher die Arme das Paar von Vorformen aus den Schienen heben und drehen, um das Paar von Vorformen aus den Schienen zu entfernen und auszuwerfen,
die Arme sich um dieselbe Achse (X) drehen.

2. Vorrichtung nach Anspruch 1, **dadurch gekennzeichnet, dass** die Endteile der Gabelarme mit einer Distanz voneinander beabstandet sind, die größer ist als der Durchmesser des Gewindeteils der Vorformen (1) und als der Durchmesser (d) des Zylinderkörpers der Vorform unter dem Bund.

3. Vorrichtung nach Anspruch 2, **dadurch gekennzeichnet, dass** die Drehung der Gabel um eine horizontale Achse (X) erfolgt, die sich quer zu der durch den vertieften Zwischenraum verlaufenden vertikalen Ebene an einer Position über dem vertieften Zwischenraum erstreckt.

4. Vorrichtung nach Anspruch 3, **dadurch gekennzeichnet, dass** die Drehung der Anordnung eine kontinuierliche Drehung ist und dass die Drehrate und der Winkel zwischen den Drehgabeln derart gewählt sind, dass die Gabeln zwei aufeinanderfolgende und benachbarte der Paare von inneren und äußeren Vorformen (12, 13) entfernen können.

5. Vorrichtung nach wenigstens einem der vorstehenden Ansprüche, **dadurch gekennzeichnet, dass** die Gabelarme parallel zu den Schienen ausgerichtet werden können, wobei die Distanz (H) zwischen den Gabeln und den Schienen gleich oder etwas kleiner als die Distanz zwischen den Schienen und dem Bund (16) der inneren Vorform (13) ist.

6. Vorrichtung nach wenigstens einem der vorstehenden Ansprüche, **dadurch, gekennzeichnet, dass** weiterhin ein Schutzglied (22) vorgesehen ist, das vorzugsweise ein entfernbar befestigtes klammerartiges Glied ist, das mittels einer entsprechenden Befestigungseinrichtung (24, 26) befestigt und unmittelbar auf die Anordnung folgend über dem entsprechenden Teil der Schienen positioniert ist.

## Revendications

1. Appareil destiné au transfért de préformes (1), comprenant une paire de rails parallèles (2, 3) séparés par un espace formant une gorge dans lequel est introduite de manière temporaire une pluralité de préformes de sorte qu'elles sont capables de glisser en séquence ordonnée entre lesdits rails, qui sont aménagés en pente à partir d'un poste de chargement supérieur (4) jusqu'à un poste de déchargement inférieur (5), ledit appareil comportant un aménagement (6) adapté pour :
- intercepter le passage de paires de préformes dans lesquelles est introduite une préforme interne (13), avec l'extrémité fermée du corps de celle-ci dans l'ouverture d'une préforme externe respective (12), ladite paire de préformes étant supportée par lesdits rails au moyen desdits rails parallèles s'engageant avec la partie de col (26) de ladite préforme externe, et ladite préforme interne (13) se déplaçant vers l'avant à une hauteur telle que le col respectif (16) de celle-ci est relevé à partir du bord supérieur desdits rails d'une distance (H) qui est plus grande qu'une valeur prédéterminée,
- retirer ladite paire de préformes (12,13) de ladite pluralité de préformes (1),
- lever et retirer dudit espace formant une gorge lesdites paires de préformes (12, 13) dont une est introduite dans l'autre,
**caractérisé en ce que**
- ledit aménagement comprend une pluralité de fourchettes rotatives (8), dont chacune comporte deux bras extérieurs parallèles (9, 10) aménagés au-dessus desdits rails,
- lesdits bras étant capables de se déplacer sur au moins une première position (figure 4) dans laquelle le col de ladite préforme interne d'entrée est saisi par lesdits bras, et une seconde position (figure 8) dans laquelle lesdits bras lèvent lesdites paires de préformes hors desdits rails et tournent de manière à retirer et à éjecter ladite paire de préformes desdits rails,
- lesdites fourchettes étant en rotation autour du même axe unique (X).

2. Appareil selon la revendication 1, **caractérisé en ce que** les parties d'extrémité desdits bras desdites fourchettes sont séparées l'une de l'autre d'une distance qui est plus grande que le diamètre de la partie filetée desdites préformes (1) et que le diamètre (d) du corps cylindrique de la préforme en dessous du col respectif.

3. Appareil selon la revendication 2, **caractérisé en ce que** la rotation desdites fourchettes s'effectue autour d'un axe horizontal (X) s'étendant transversalement par rapport au plan vertical qui passe au travers dudit espace formant une gorge et situé à une position plus élevée au dessus de celui-ci.

4. Appareil selon la revendication 3, **caractérisé en ce que** la rotation dudit aménagement est une rotation continue, et que la vitesse de rotation est telle et que l'angle entre lesdites fourchettes est tel que lesdites fourchettes sont adaptées pour retirer individuellement deux paires successives et adjacentes desdites paires de préformes internes et externes (12, 13).

5. Appareil selon l'une quelconque des revendications précédentes, **caractérisé en ce que** les bras desdites fourchettes sont adaptés pour avoir une orientation qui est parallèle aux dits rails lorsque la distance (H) existant entre lesdites fourchettes et lesdits rails est égale ou légèrement inférieure à la distance existant entre lesdits rails et le col (16) de ladite préforme interne (13).

6. Appareil selon l'une quelconque des revendications précédentes, **caractérisé en ce qu'**il comporte également un élément de protection (22), de préférence formé par un élément en forme de support monté de manière amovible, fixé sur celui-ci à l'aide de moyens de fixation appropriés (24, 36) et situé immédiatement en aval dudit aménagement au dessus de la partie respective desdits rails.
